# EUROPÄISCHE PATENTSCHRIFT

(11) **EP 3 918 207 B1**
(45) Veröffentlichungstag und Bekanntmachung des Hinweises auf die Patenterteilung: **17.08.2022**
(21) Anmeldenummer: 20703393.7
(22) Anmeldetag: 23.01.2020
(51) Int. Cl.: F15B 11/10, F15B 21/08, B21B 31/32, B21B 37/62, G05B 11/01, G05B 19/46, G05D 16/20, G05D 3/12

(54) **STEUERUNG HYDRAULISCHER STELLZYLINDER IN WALZGERÜSTEN**
CONTROLLING HYDRAULIC ACTUATING CYLINDERS IN ROLL STANDS
COMMANDE DE CYLINDRES DE RÉGLAGE HYDRAULIQUES DANS LES CAGES DE LAMINAGE

(30) Priorität: 28.01.2019 DE 102019201043
(43) Veröffentlichungstag der Anmeldung: 08.12.2021
(73) Patentinhaber: SMS Group GmbH, 40237 Düsseldorf (DE)
(72) Erfinder: ZIELENBACH, Michael, 57074 Siegen (DE); SOHLER, Jörn, 57223 Kreuztal (DE); HORN, Peter, 57271 Hilchenbach (DE); SCHMIDT, Martin, 57271 Hilchenbach (DE)
(74) Vertreter: Kross, Ulrich
(86) Internationale Anmeldenummer: PCT/EP2020/051692
(87) Internationale Veröffentlichungsnummer: WO 2020/156932

(56) Entgegenhaltungen:
- EP-A2- 1 033 498
- WO-A1-2013/089226
- US-A1- 2011 120 296

## Beschreibung

### Technisches Gebiet

Die Erfindung betrifft einen hydraulischen Regelkreis sowie ein Verfahren zur Steuerung eines hydraulischen Stellzylinders, insbesondere eines Anstellzylinders für eine Arbeitswalze in einem Walzgerüst, vorzugsweise Stauchgerüst.

### Hintergrund der Erfindung

Es ist bekannt, den Walzenspalt zwischen zwei Arbeitswalzen mit Hilfe von hydraulischen Stellzylindern einzustellen. Zu diesem Zweck werden die endseitigen Lagerungen einer oder mehrerer Arbeitswalzen von den Stellzylindern verfahrbar gehalten. Insbesondere im Fall von Stauchgerüsten können die Stellzylinder einen vergleichsweise langen Hub aufweisen. Die Betätigung der Stellzylinder kann hierbei über eine sogenannte "2-Kantensteuerung" oder "4-Kantensteuerung" erfolgen.

Bei der 2-Kantensteuerung erfolgen der Zufluss der Hydraulikflüssigkeit in die kolbenseitige Zylinderkammer sowie der Abfluss aus dieser heraus durch ein oder mehrere Stetigventile, während die stangenseitige Zylinderkammer auf einem konstanten Druck gehalten wird. Das Stetigventil dient hierbei als Stellglied für eine Positions- oder Druckregelung des Stellzylinders. Dabei ist nur ein Ausgang des Stetigventils mit dem Stellzylinder verbunden. Der andere Ausgang des Stetigventils wird nicht benutzt. Zur Einstellung des konstanten Drucks in der stangenseitigen Zylinderkammer kann ebenfalls ein Stetigventil in Verbindung mit einem Druckregler eingesetzt werden. Die mit dem konstanten Druck beaufschlagte stangenseitige Kolbenfläche wird üblicherweise klein gehalten (beispielsweise etwa 15 % der gegenüberliegenden Kolbenfläche), da die aus dieser Fläche und dem konstanten Druck resultierende Kraft der kolbenseitigen Kraft entgegenwirkt.

Bei der 4-Kantensteuerung werden ein Ausgang eines Stetigventils mit der Kammer auf einer Zylinderseite des Stellzylinders und ein anderer Ausgang des Stetigventils mit der Kammer auf der anderen Zylinderseite verbunden. Diese Art der Ansteuerung ist insbesondere für Stellzylinder mit zwei gleich großen Kolbenflächen anwendbar, etwa für Anstellzylinder von Stauchern mit zwei Kolbenstangen identischer Durchmesser.

Ein kritischer Betriebszustand von Stellzylindern tritt bei plötzlichen Belastungsänderungen, beispielsweise Änderungen der Walzkraft unmittelbar bei dem Anstich, auf. Dabei wird der Stellzylinder zusammengedrückt, was zu Dickenfehlern am Walzgut führen kann. Das Problem nimmt aufgrund der Kompressibilität der Hydraulikflüssigkeit mit steigender Hydraulikflüssigkeitssäule auf derjenigen Zylinderseite zu, die durch den Anstich komprimiert wird. Eine stoßseitige Belastung führt somit zu einem kurzzeitigen Nachgeben des Stellzylinders. Im Fall der 2-Kantensteuerung hat die stangenseitige Kolbenfläche keinen großen Einfluss auf das Zusammendrücken, da sie im Vergleich zur gegenüberliegenden Kolbenseite klein ist und der Druck auf diese konstant ist. Bei der 4-Kantensteuerung agieren beide Kolbenseiten gegen den Anstich. Dadurch kann die mit zunehmender Hydraulikflüssigkeitssäule steigende Nachgiebigkeit der einen Seite durch die abnehmende Nachgiebigkeit der anderen Seite zumindest teilweise kompensiert werden. Nachteilig bei dieser Hydraulikschaltung ist jedoch, dass sich die Zylinderkraft, die zum Einstellen der Sollposition erforderlich ist, aus zwei veränderlichen Drücken und den zugehörigen Kolbenflächen ergibt. Zur Einstellung einer bestimmten Kraft gibt es daher theoretisch unendlich viele Kombinationen für die beiden Zylinderdrücke. Die sich letztlich einstellende Druckkombination hängt unter anderem von den Leckagen der Ventile ab und ist somit kaum definierbar. Aus diesem Grund kann es vorkommen, dass der stangenseitige Druck auf die Kolbenfläche bis auf 0 bar absinkt, wodurch die Gegenwirkung bzw. Federwirkung beim Anstich auf der Stangenseite verschwindet. Dies wiederum kann zu problematischen Unterdrücken und Kavitationserscheinungen führen.

Die EP 1 033 498 B1 befasst sich mit dem oben dargelegten Problem einer ungewollten Verschiebung des Kolbens bei einer stoßartigen, äußeren Belastung auf den Kolben. Darin wird vorgeschlagen, den Kolben vor einer solchen Belastung unter einem Hydraulikdruck, der von der aktuellen Arbeitsstellung des Kolbens abhängt, zu arretieren. Der Hydraulikdruck ist hierbei so zu wählen, dass er von der Anschlagstellung des Kolbens auf der bei der äußeren Kraft entlasteten Kolbenseite bis zur gegenüberliegenden Anschlagstellung über den Stellweg hinweg abnimmt.

Nachdem der Hydraulikdruck auf diese Weise gewählt und eingestellt ist, wird die Position des Kolbens als ausreichend stabil angenommen. Nach der hydraulischen Arretierung erfolgt keine weitere Druck- oder Positionsregelung des Stellzylinders. Dies hat zur Folge, dass Änderungen im Verhalten des Regelkreises, beispielsweise der Einfluss eines etwaigen Ventilverschleißes auf die Stabilität des Regelkreises unter Belastung, unberücksichtigt bleiben.

Die WO 2013/089226 A1 und US 2011/0120296 A1 beschreiben einen hydraulischen Aktuator und ein Steuerverfahren für einen solchen Aktuator.

### Darstellung der Erfindung

Eine Aufgabe der Erfindung besteht darin, einen verbesserten hydraulischen Regelkreis sowie ein verbessertes Verfahren zur Steuerung eines hydraulischen Stellzylinders, insbesondere eines Anstellzylinders für eine Arbeitswalze in einem Walzgerüst, anzugeben, insbesondere die Stabilität des Kolbens des Stellzylinders bei einer plötzlichen Belastungsänderung und/oder die Zuverlässigkeit der Regelung zu verbessern.

Gelöst wird die Aufgabe mit einem Regelkreis mit den Merkmalen des Anspruchs 1 sowie einem Verfahren mit den Merkmalen des Anspruchs 7. Vorteilhafte Weiterbildungen folgen aus den Unteransprüchen, der folgenden Darstellung der Erfindung sowie der Beschreibung bevorzugter Ausführungsbeispiele.

Der erfindungsgemäße hydraulische Regelkreis dient der Steuerung eines hydraulischen Stellzylinders, insbesondere eines Anstellzylinders für eine Arbeitswalze in einem Walzgerüst. Besonders bevorzugt handelt es sich um einen Anstellzylinder in einem Stauchgerüst, da diese vergleichsweise große Hübe zu realisieren haben und das technische Problem der Stabilisierung des Kolbens gegen äußere Kräfte mit zunehmender Länge des Stellzylinders relevanter wird.

Der Stellzylinder weist wie üblich ein zylindrisches Gehäuse und einen darin verschiebbar angeordneten Kolben auf, der das Gehäuseinnere in eine erste Hydraulickammer und eine zweite Hydraulikkammer unterteilt. Es sei darauf hingewiesen, dass die Bezeichnungen "erste" und "zweite" hierin keine Ordnung oder Reihenfolge implizieren, sondern lediglich der sprachlichen Unterscheidung dienen. Im Fall eines Stellzylinders mit einer einseitig angeordneten Kolbenstange seien die erste Hydraulikkammer der stangenseitigen Hydraulikkammer und die zweite Hydraulikkammer der kolbenseitigen Hydraulikkammer zugeordnet.

Der Regelkreis gemäß der Erfindung weist zumindest ein erstes Hydraulikventil auf, das eingerichtet ist, um die erste Hydraulikkammer des Stellzylinders mit einem Hydraulikfluid zu beaufschlagen, wobei der Hydraulikdruck der ersten Hydraulickammer über eine Ansteuerung des ersten Hydraulikventils einstellbar, d.h. veränderlich, ist. Der Regelkreis weist ferner zumindest ein zweites Hydraulikventil auf, das eingerichtet ist, um die zweite Hydraulikkammer des Stellzylinders mit einem Hydraulikfluid zu beaufschlagen, wobei der Hydraulikdruck der zweiten Hydraulikkammer über eine Ansteuerung des zweiten Hydraulikventils einstellbar, d.h. ebenfalls veränderlich, ist. Die zwei oder mehr Hydraulikventile zur Betätigung des Stellzylinders können jeweils durch ein Mehrwegventil realisiert werden. Vorzugsweise sind ein oder mehrere der Hydraulikventile als Stetigventile, beispielsweise Proportionalventile, ausgeführt.

Der Regelkreis gemäß der Erfindung weist ferner eine Regeleinrichtung auf, die zur Ansteuerung der beiden Hydraulikventile vorgesehen ist. Die Regeleinrichtung ist eingerichtet, um in einem Positionsregelzustand das zweite Hydraulikventil mit einem von der Arbeitsstellung des Kolbens abhängigen Positionsregelsignal anzusteuern und das erste Hydraulikventil mit einem angepassten Positionsregelsignal, das ein auf der Basis des Positionsregelsignals erzeugtes Signal ist, anzusteuern. In anderen Worten, die Regeleinrichtung kann eine als "Positionsregelzustand" bezeichnete Betriebsart einnehmen, in der die zweite Hydraulikkammer mit einem von der Arbeitsstellung des Kolbens abhängigen Hydraulikdruck beaufschlagt wird, indem das zweite Hydraulikventil mit einem Positionsregelsignal angesteuert wird, und die erste Hydraulikkammer mit einem ebenfalls von der Arbeitsstellung des Kolbens abhängigen Hydraulikdruck beaufschlagt wird, indem das erste Hydraulikventil mit einem anderen Signal, das hierin als "angepasstes Positionsregelsignal" bezeichnet sei, angesteuert wird. Das angepasste Positionsregelsignal wird von der Regeleinrichtung auf der Basis des Positionsregelsignals, d.h. abhängig vom Positionsregelsignal, erzeugt. Das angepasste Positionsregelsignal kann beispielsweise eine Funktion des Positionsregelsignals sein.

Indem die Hydraulikdrücke in der ersten und zweiten Hydraulikkammer auf der Basis des Positionsregelsignals, das von der Arbeitsstellung des Kolbens abhängt, eingestellt werden, kann ein vollständiger Druckabfall verhindert werden. Die Federwirkungen der Hydraulikkammern auf beiden Kolbenseiten können gezielt zur Stabilisierung ausgenutzt werden. Auf diese Weise lässt sich eine stabile und zuverlässige hydraulische Arretierung des Kolbens an der aktuellen Arbeitsstellung realisieren. Da der Kolben bei einer plötzlichen Belastungsänderung kaum nachgibt, kann der Stellzylinder mit einer vergleichsweise langen Hydraulikfluidsäule betrieben werden, d.h. einen langen Hub aufweisen, ohne dass es zu Nachteilen hinsichtlich der Walzstabilität und Qualität des Walzgutes kommt. Durch die Regelung der Hydraulikdrücke in der ersten und zweiten Hydraulikkammer auf der Basis des Positionsregelsignals kann zudem verhindert werden, dass der Druck in einer der beiden Hydraulikkammern, etwa der stangenseigen Hydraulikkammer, während des Walzens unter einen Schwellwert, d.h. unter einen bestimmten minimalen Druck, fällt, wodurch die Gefahr von Kavitation während des Walzvorganges verringert wird.

Vorzugsweise ist die Regeleinrichtung eingerichtet, um die Ansteuerung der beiden Hydraulikventile im Fall einer plötzlichen Belastung bzw. Belastungsänderung des Kolbens in dem Positionsregelzustand durchzuführen. Eine solche Belastungsänderung oder Kraftänderung tritt beispielsweise beim Anstich des Walzgerüsts auf. Insbesondere für einen solchen Fall ist der Positionsregelzustand geeignet, da eine zuverlässige Stabilisierung bzw. hydraulische Arretierung des Kolbens zu einer Verbesserung der Walzqualität führt.

Vorzugsweise weist die Regeleinrichtung einen Positionsregler, der zur Erzeugung des Positionsregelsignals eingerichtet ist, sowie eine Anpassungseinrichtung mit einer Eingabe, die das Positionsregelsignal empfängt, und einer Ausgabe, die das angepasste Positionsregelsignal ausgibt, auf. Hierbei übernimmt die Anpassungseinrichtung die Erzeugung des angepassten Positionsregelsignals. Auf diese Weise kann das angepasste Positionsregelsignal auf baulich einfache und flexibel anpassbare Weise erzeugt werden. Gemäß einer besonders bevorzugten Ausführungsform wird das angepasste Positionsregelsignal durch Invertierung des Positionsregelsignals erzeugt, wodurch eine optimale und aufeinander angepasste Federwirkung der beiden Hydraulikkammern generiert wird.

Vorzugsweise weist die Regeleinrichtung eine Verschleißanpassungseinrichtung auf, die eingerichtet ist, um das Positionsregelsignal mit einem zusätzlichen Faktor zu bewerten. Ein solcher zusätzlicher Faktor kann zur Kompensation des Verschleißes des ersten und/oder zweiten Hydraulikventils genutzt werden. So kann beispielsweise als Maß für den Verschleiß die Ausgabe eines Leckfluidintegrierers, der eine Leckage des Hydraulikfluids überwacht oder ermittelt, herangezogen werden. Auf diese Weise lässt sich das Positionsregelsignal kontinuierlich an den Verschleiß im Regelkreis, etwa den Ventilverschleiß, anpassen, wodurch eine Abnahme der Regelungsstabilität mit zunehmendem Verschleiß unterbunden werden kann. Erfindungsgemäß weist die Regeleinrichtung eine Schalteinrichtung auf, die zum Umschalten zwischen dem Positionsregelzustand und einem Druckregelzustand eingerichtet ist. Der "Druckregelzustand" bezeichnet hierbei einen Betriebszustand des Regelkreises zur Positionierung des Kolbens, d.h. zur Änderung der Arbeitsstellung des Kolbens. Die Regeleinrichtung ist gemäß dieser besonders bevorzugten Ausführungsform so eingerichtet, dass sie im Druckregelzustand das erste Hydraulikventil so ansteuert, dass der Hydraulikdruck in der ersten Hydraulikkammer (während der Positionierung des Kolbens) im Wesentlichen konstant bleibt, während das zweite Hydraulikventil, angesteuert durch das Positionsregelsignal, als Stellglied fungiert. Auf diese Weise kann auf technisch einfache und zuverlässige Weise die Position des Kolbens, somit die Anstellung einer etwaigen damit verbunden Arbeitswalze, geändert werden.

Der Kolben weist eine erste Zylinderfläche und eine zweite Zylinderfläche auf, wobei der Nenndurchfluss des ersten Hydraulikventils gemäß einer bevorzugten Ausführungsform um das Flächenverhältnis der ersten Zylinderfläche zur zweiten Zylinderfläche geringer ist als der Nenndurchfluss des zweiten Hydraulikventils, wodurch eine besonders harmonische Betätigung des Stellzylinders sichergestellt wird. Hierbei befindet sich die erste Zylinderfläche vorzugsweise auf der Stangenseite des Kolbens, während sich auf der gegenüberliegenden Seite des Kolbens keine Kolbenstange befindet.

Die obige Aufgabe wird ferner durch ein Verfahren gelöst, zur Steuerung eines hydraulischen Stellzylinders, insbesondere eines Anstellzylinders für eine Arbeitswalze in einem Walzgerüst, der ein zylindrisches Gehäuse und einen darin verschiebbar angeordneten Kolben aufweist, der das Gehäuseinnere in eine erste Hydraulikkammer und eine zweite Hydraulikkammer unterteilt. Das Verfahren weist auf: Beaufschlagen der ersten Hydraulikkammer mit einem Hydraulikdruck mittels eines ersten Hydraulikventils; Beaufschlagen der zweiten Hydraulikkammer mit einem Hydraulikdruck mittels eines zweiten Hydraulikventils; wobei in einem Positionsregelzustand die zweite Hydraulikkammer mit einem von der Arbeitsstellung des Kolbens abhängigen Hydraulikdruck beaufschlagt wird, indem das zweite Hydraulikventil mit einem Positionsregelsignal angesteuert wird, und die erste Hydraulikkammer mit einem von der Arbeitsstellung des Kolbens abhängigen Hydraulikdruck beaufschlagt wird, indem das erste Hydraulikventil mit einem angepassten Positionsregelsignal, das ein auf der Basis des Positionsregelsignals erzeugtes Signal ist, angesteuert wird.

Die Merkmale, technischen Wirkungen, Vorteile sowie Ausführungsbeispiele, die in Bezug auf den hydraulischen Regelkreis beschrieben wurden, gelten analog für das Verfahren.

So wird die Ansteuerung der beiden Hydraulikventile im Fall einer plötzlichen Belastung bzw. Belastungsänderung des Kolbens, etwa beim Anstich des Walzgerüsts, in dem Positionsregelzustand durchgeführt, da gerade in einem solchen Fall eine zuverlässige Stabilisierung bzw. hydraulische Arretierung des Kolbens zu einer Verbesserung der Walzqualität führt.

Vorzugsweise wird das angepasste Positionsregelsignal durch Invertierung des Positionsregelsignals erzeugt, wodurch eine optimale und aufeinander angepasste Federwirkung der beiden Hydraulikkammern generiert wird.

Vorzugsweise wird das Positionsregelsignal mit einem zusätzlichen Faktor bewertet, der etwa zur Kompensation des Verschleißes des ersten und/oder zweiten Hydraulikventils vorgesehen ist. So kann beispielsweise als Maß für den Verschleiß die Ausgabe eines Leckfluidintegrierers, der eine Leckage des Hydraulikfluids überwacht oder ermittelt, herangezogen werden. Auf diese Weise lässt sich das Positionsregelsignal kontinuierlich an den Verschleiß im Regelkreis, etwa den Ventilverschleiß, anpassen, wodurch eine Abnahme der Regelungsstabilität mit zunehmendem Verschleiß unterbunden werden kann.

Erfindungsgemäß weist das Verfahren ferner auf: Positionieren des Kolbens in einem Druckregelzustand, in dem das erste Hydraulikventil so angesteuert wird, dass der Hydraulikdruck in der ersten Hydraulikkammer im Wesentlichen konstant bleibt, und das zweite Hydraulikventil durch das Positionsregelsignal angesteuert wird; und Umschalten vom Druckregelzustand in den Positionsregelzustand. Auf diese Weise kann auf technisch einfache und zuverlässige Weise die Position des Kolbens, somit die Anstellung einer etwaigen damit verbunden Arbeitswalze, geändert werden.

Vorzugsweise wird der Hydraulikdruck in der ersten und/oder zweiten Hydraulickammer im Druckregelzustand vor dem Umschalten in den Positionsregelzustand im Wesentlichen auf den Systemdruck eingestellt. Wenn das zugehörige Hydraulikventil den hohen Druck aus einem Druckspeicher bezieht, kann dieser hierin als Systemdruck angesehen werden. Auf diese Weise kann nach der Umschaltung in den Positionsregelzustand die Federwirkung der betreffenden Hydraulikkammer(n), vorzugsweise auf der Stangenseite, maximal ausgenutzt werden.

Vorzugsweise wird im Positionsregelzustand der von der Stellung des Kolbens abhängige Hydraulikdruck in der ersten und/oder zweiten Hydraulikkammer so eingestellt, dass dieser von der Anschlagstellung des Kolbens auf der bei einer auftretenden Belastungsänderung des Kolbens entlasteten Kolbenseite bis zur gegenüberliegenden Anschlagstellung über den Stellweg abnimmt. Auf diese Weise kann die hydraulische Verriegelung des Kolbens zum Zeitpunkt der Belastungsänderung optimiert werden.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale realisiert werden, insofern sich die Merkmale nicht widersprechen. Die folgende Beschreibung der bevorzugten Ausführungsbeispiele erfolgt mit Bezug auf die begleitenden Zeichnungen.

### Kurze Beschreibung der Figuren

Die Figuren 1a und 1b sind schematische Darstellungen eines hydraulischen Regelkreises zur Ansteuerung eines Stellzylinders, der zur Anwendung in einem Walzgerüst vorgesehen ist, gezeigt in einem Druckregelzustand (Figur 1a) und einem Positionsregelzustand (Figur 1b).

Die Figuren 2a bis 2d sind Diagramme, die den zeitlichen Verlauf ausgewählter Parameter des Regelkreises gemäß den Figuren 1a und 1b beim Auftreten einer plötzlichen Walzkraftänderung zeigen.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

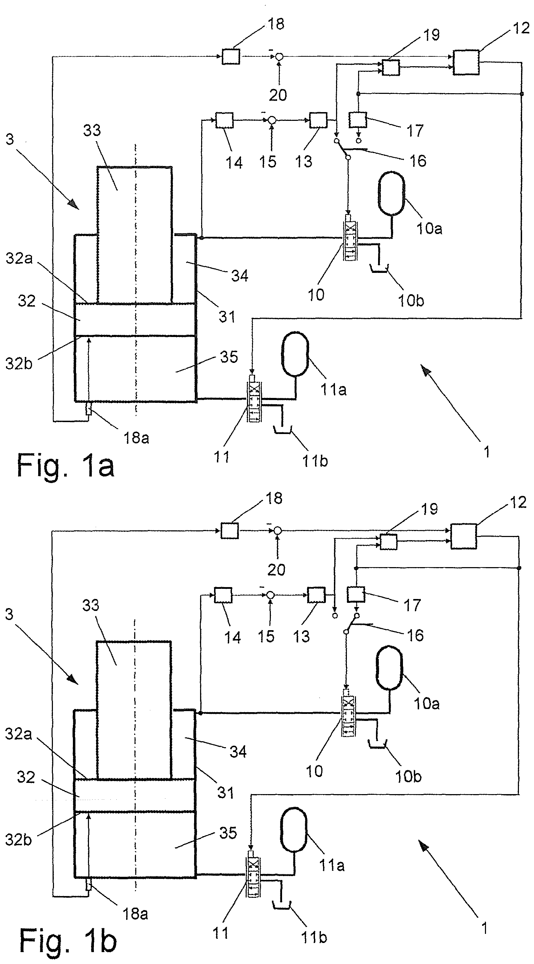

Die Figuren 1a und 1b sind schematische Darstellungen eines hydraulischen Regelkreises 1 zur Ansteuerung eines Stellzylinders 3, der zur Anwendung in einem Walzgerüst vorgesehen ist, gezeigt in einem Druckregelzustand (Figur 1a) und einem Positionsregelzustand (Figur 1b).

Der Stellzylinder 3, der vorzugsweise ein Anstellzylinder für ein Stauchgerüst ist, weist ein zylindrisches Gehäuse 31 auf, in dem ein Kolben 32 verschiebbar gelagert ist. Im vorliegenden Ausführungsbeispiel weist der Stellzylinder 3 auf einer Seite des Kolbens 32 eine Kolbenstange 33 auf, so dass der Kolben 32 das Gehäuseinnere in eine erste, d.h. stangenseitige, Hydraulikkammer 34 und eine zweite, d.h. kolbenseitigen, Hydraulikkammer 35 unterteilt. In den beiden Hydraulikkammern 34, 35 befindet sich ein Hydraulikfluid, vorzugsweise Hydrauliköl. Die Drücke in den Hydraulikkammern 34, 35 wirken entsprechend auf eine erste, d.h. stangenseitige, Zylinderfläche 32a und eine zweite, d.h. kolbenseitige, Zylinderfläche 32b.

Es sei darauf hingewiesen, dass der in den Figuren 1a und 1b dargestellte Stellzylinderaufbau nur beispielhaft ist. Beispielsweise ist die hierin dargelegte Regelung ebenfalls für einen Stellzylinder mit zwei Kolbenstangen, somit zwei ringförmigen Zylinderflächen anwendbar.

Der Regelkreis 1 weist ein erstes Hydraulikventil 10 auf, das für den Zufluss des Hydraulikfluids in die erste Hydraulikkammer 34 und Abfluss des Hydraulikfluids daraus eingerichtet ist. Zu diesem Zweck ist ein Ausgang des ersten Hydraulikventils 10 über eine Hydraulikleitung mit der ersten Hydraulikkammer 34 verbunden. Etwaige weitere Ausgänge des ersten Hydraulikventils 10 werden nicht genutzt. Das erste Hydraulikventil 10 ist vorzugsweise als Stetigventil, beispielsweise Proportionalventil, ausgebildet.

Analog weist der Regelkreis 1 ein zweites Hydraulikventil 11 auf, das für den Zufluss des Hydraulikfluids in die zweite Hydraulikkammer 35 und Abfluss des Hydraulikfluids daraus eingerichtet ist. Zu diesem Zweck ist ein Ausgang des zweiten Hydraulikventils 11 über eine Hydraulikleitung mit der zweiten Hydraulikkammer 35 verbunden. Etwaige weitere Ausgänge des zweiten Hydraulikventils 11 werden nicht genutzt. Das zweite Hydraulikventil 11 ist vorzugsweise als Stetigventil, beispielsweise Proportionalventil, ausgebildet.

Es sei darauf hingewiesen, dass kolbenseitig und/oder stangenseitig jeweils mehrere Hydraulikventile vorgesehen sein können.

Die Eingänge des ersten und zweiten Hydraulikventils 10, 11 sind entsprechend jeweils mit einem Druckspeicher 10a, 11a und einem Hydraulikfluidbehälter 10b, 11b über Hydraulikleitungen verbunden. Auch wenn in der Figur 1 die Druckspeicher 10a und 11a als separate Speicher gezeigt sind, werden diese vorzugsweise durch einen einzigen Druckspeicher realisiert. Gleiches gilt für die Hydraulikfluidbehälter 10b, 11b. Die Druckspeicher 10a, 11a können über eine nicht dargestellte Pumpe aus den Hydraulikfluidbehältern 10b, 11b geladen werden. Je nach Stellung der Hydraulikventile 10, 11 können die erste und zweite Hydraulikkammer 34, 35 des Stellzylinders 3 mit einem unter Druck stehenden Hydraulikfluid versorgt und der Kolben 32 somit beidseitig gezielt beaufschlagt werden.

Die Position des Kolbens 32 (somit die Walzenanstellung) wird über einen Positionsregler 12 eingestellt, der das zweite, d.h. kolbenseitige, Hydraulikventil 11 als Stellglied benutzt. Das vom Positionsregler 12 ausgegebene Steuersignal sei als "Positionsregelsignal" bezeichnet.

Der Positionsregler 12 empfängt als Eingabe ein Signal von einem Wegmesser 18, der über einen Wegsensor 18a die aktuelle Stellung bzw. Position des Kolbens 32 über eine Wegmessung bestimmt, wodurch die Steuerung in Abhängigkeit der Arbeitsstellung des Kolbens 32 durchgeführt werden kann. Vorzugsweise ist die Sollposition über eine Sollposition-Eingabe 20 einstellbar bzw. wählbar, beispielsweise über eine Benutzereingabe oder ein Signal, welches das Ergebnis einer automatisierten Berechnung oder Optimierung der Anlage ist. Der Hydraulikdruck in der ersten und/oder zweiten Hydraulikkammer 34, 35 kann hierbei so gewählt werden, dass er von der Anschlagstellung des Kolbens auf der bei der äußeren Kraft entlasteten Kolbenseite bis zur gegenüberliegenden Anschlagstellung über den Stellweg abnimmt.

Der Positionsregler 12 kann eine weitere Eingabe empfangen, die das Positionsregelsignal mit einem zusätzlichen Faktor bewertet, der vorzugsweise zur Kompensation des Verschleißes des ersten und/oder zweiten Hydraulikventils 10, 11 dient. Über diese zweite Eingabe des Positionsreglers 12 findet somit vorzugsweise eine Positionsregelverstärkung statt, die der normalen Positionsregelung eine verschleißbedingte bzw. verschleißkompensierende Verstärkung hinzufügt. Diese kann von einer Verschleißanpassungseinrichtung 19 bestimmt werden. Als Maß für den Verschleiß wird vorzugsweise der Ausgang eines Leckfluidintegrierers in der Positionsregelung benutzt. Auf diese Weise lässt sich das Positionsregelsignal kontinuierlich an den Ventilverschleiß anpassen, wodurch eine Abnahme der Regelungsstabilität mit zunehmendem Ventilverschleiß unterbunden werden kann.

Auf der Stangenseite des Stellzylinders 3 wird außerhalb des eigentlichen Walzvorganges zur Positionierung des Kolbens 32 ein konstanter Druck eingestellt. Der Ausgang des Positionsreglers 12 ist hierbei über einen Steuerweg mit dem Steuereingang des zweiten Hydraulikventils 11 verbunden. Der konstante Druck auf der Stangenseite wird dadurch erreicht, dass der Steuereingang des ersten Hydraulikventils 10 mit dem Ausgang eines Druckreglers 13 verbunden ist, wie es aus der Figur 1a hervorgeht. Der Druckregler 13 empfängt als Eingabe einen Messwert des aktuellen Drucks auf der Stangenseite des Stellzylinders 3, der über einen Druckmesser 14 ermittelt wird. Vorzugsweise ist der Solldruck über eine Solldruck-Eingabe 15 einstellbar bzw. wählbar, beispielsweise über eine Benutzereingabe oder ein Signal, welches das Ergebnis einer automatisierten Berechnung oder Optimierung der Anlage ist.

Der Zustand des Regelkreises 1 zur Positionseinstellung des Kolbens 32, der hierin auch als "Druckregelzustand" bezeichnet ist, ist in der Figur 1a gezeigt und wird durch entsprechendes Schalten einer Schalteinrichtung 16 eingestellt.

Bei einer plötzlichen Belastungsänderung, beispielsweise beim Anstich, wird die Druckregelung auf der Kolbenstangenseite durch Umschalten der Schalteinrichtung 16 abgeschaltet, und sowohl das erste als auch zweite Hydraulikventil 10, 11 werden dann vom Positionsregler 12 angesteuert. Dieser Zustand, der hierin auch als "Positionsregelzustand" bezeichnet ist, ist in der Figur 1b gezeigt.

In diesem Fall ist der Ausgang des Positionsreglers 12 wie im Druckregelzustand mit dem zweiten Hydraulikventil 11 und ferner über eine Anpassungseinrichtung 17 mit dem ersten Hydraulikventil 10 verbunden. In anderen Worten, das Positionsregelsignal wird unverändert dem zweiten Hydraulikventil 11 zugeführt, während es modifiziert durch die Anpassungseinrichtung 17 dem ersten Hydraulikventil 10 zugeführt wird. Die Anpassungseinrichtung 17 passt das vom Positionsregler 12 für die Kolbenseite des Stellzylinders 3 definierte und ausgegebene Steuersignal an die Stangenseite an. Dieses stangenseitig angepasste Ventilsteuersignal sei als "angepasstes Positionsregelsignal" bezeichnet.

Die Anpassung erfolgt vorzugsweise derart, dass das erste Hydraulikventil 10, d.h. die Druckeinstellung auf der Stangenseite des Stellzylinders 3, das invertierte Signal, ausgegeben vom Positionsregler 12 an das zweite Hydraulikventil 11, empfängt.

Die beschriebene Ansteuerung der beiden Hydraulikventile 10, 11 verhindert bei einer plötzlichen Belastungsänderung auf den Kolben 32 nach dem Umschalten in den Positionsregelzustand einen vollständigen Druckabfall, wodurch die Federwirkung beider Hydraulikkammern 34, 35 zuverlässig ausgenutzt wird. Auf diese Weise lässt sich eine stabile und zuverlässige Arretierung des Kolbens 32 realisieren. Der Druck in der ersten Hydraulikkammer 34 wird hierbei vor der plötzlichen Belastungsänderung im Druckregelzustand vorzugsweise nahe dem möglichen Systemdruck eingestellt, um die bestmögliche hydraulische Arretierung herzustellen.

Der Druck in der stangenseigen Hydraulikkammer 34 kann während des Walzens absinken. Durch eine entsprechende Regelung des ersten Hydraulikventils 10 mittels des Positionsreglers 12 kann sichergestellt werden, dass ein gewünschter minimaler Druck nicht unterschritten wird. Dadurch wird die Gefahr von Kavitation während des Walzvorganges verringert.

Da der Kolben 32 bei einer plötzlichen Belastungsänderung kaum nachgibt, kann der Stellzylinder 3 mit längeren Hydraulikfluidsäulen, d.h. längeren Hüben, betrieben werden, ohne dass es zu Nachteilen hinsichtlich Walzstabilität und Qualität des Walzgutes kommt. So lässt sich der Stellzylinder 3 insgesamt vergrößern, indem die stangenseitige Zylinderfläche 32a relativ zur kolbenseitigen Zylinderfläche 32b vergrößert wird. Beispielsweise wird aus einem Stellzylinder 3 mit einem Durchmesserverhältnis der kolbenseitigen Zylinderfläche 32b zur stangenseitigen Zylinderfläche 32a von 1050 mm/970 mm mit einem Flächenverhältnis von ca. 1,17 ein Stellzylinder 3 mit einem Durchmesserverhältnis von 1100 mm/800 mm mit einem Flächenverhältnis von ca. 2,0. Der Nenndurchfluss des Hydraulikventils 10 auf der Stangenseite ist vorzugsweise um das Flächenverhältnis geringer als der Nenndurchfluss des Hydraulikventils 11 auf der Kolbenseite.

Es sei darauf hingewiesen, dass die zur Verdeutlichung der Funktionsweise als separate Module dargestellten elektrischen/elektronischen Steuer- und/oder Regeleinrichtungen (Positionsregler 12, Druckregler 14, Schalteinrichtung 16, Anpassungseinrichtung 17 usw.) integriert oder auf mehrere miteinander kommunizierende Vorrichtungen aufgeteilt sein können. Diese müssen sich zudem physisch nicht am Ort des Stellzylinders 3 oder der Walzanlage befinden, sondern können beispielsweise von einer oder mehreren Recheneinrichtungen, eingebettet in ein Netzwerk wie das Internet, realisiert werden.

Der Positionsregler 12, Druckregler 13, Druckmesser 14, die Solldruck-Eingabe 15, Schalteinrichtung 16, Anpassungseinrichtung 17, der Wegmesser 18, die Verschleißanpassungseinrichtung 19 sowie die Sollposition-Eingabe 20 bilden zusammen eine beispielhafte Regeleinrichtung. Allerdings sind zur Verwirklichung der Regeleinrichtung nicht unbedingt alle dieser Module erforderlich.

Der Austausch der Steuer- und Messsignale kann drahtlos oder drahtgebunden erfolgen, weshalb die Bezeichnungen "verbunden", "Steuerweg" usw. eine kommunikative Verbindung meinen, jedoch keine physische Verbindung, wie etwa ein Kabel, erfordern.

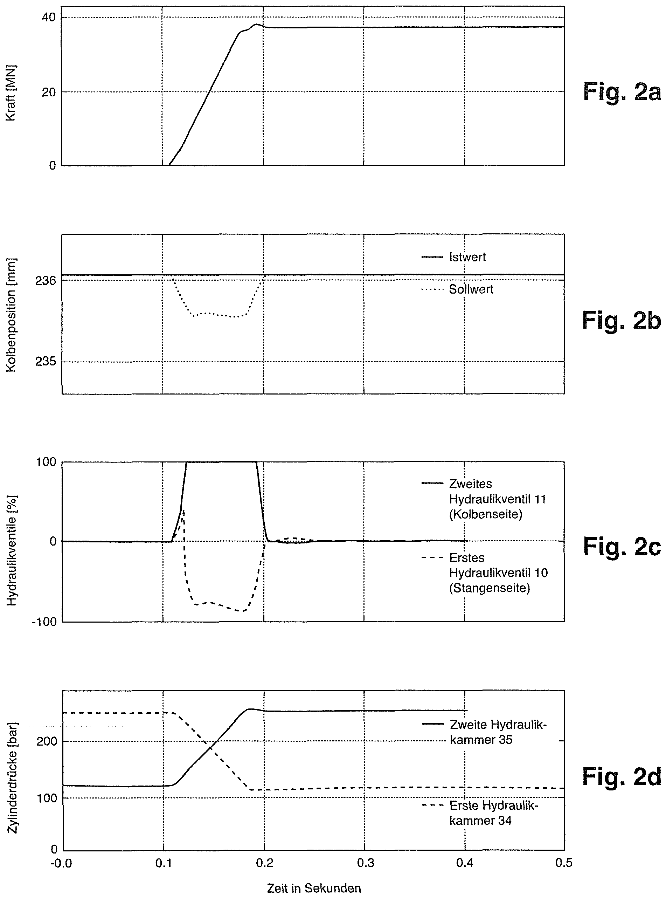

Die Figuren 2a bis 2d sind Diagramme, die den zeitlichen Verlauf ausgewählter Parameter des Regelkreises 1 gemäß den Figuren 1a und 1b beim Auftreten einer plötzlichen Belastungsänderung auf den Kolben 32 zeigen.

So zeigt die Figur 2a beispielshaft eine äußere Kraft, die auf den Kolben 32 wirkt, als Funktion der Zeit. Der Regelkreis 1 befindet sich im Positionsregelzustand. Zu einem Zeitpunkt etwa bei 0,1 Sekunden ändert sich die Belastung auf den Kolben 32, beispielsweise durch einen Anstich. Die tatsächliche Kolbenposition weicht daraufhin gemäß der Figur 2b nur sehr wenig vom Sollwert ab und kehrt rasch an die Sollposition zurück. Die Kompensation wird durch eine Ansteuerung der beiden Hydraulikventile 10 und 11 realisiert, die aus der Figur 2c hervorgeht. Das zweite Hydraulikventil 11 wird mit dem Positionsregelsignal angesteuert, während das erste Hydraulikventil 10 mit dem dazu invertierten Signal, dem angepassten Positionsregelsignal, angesteuert wird. In der Figur 2d sind die Hydraulikdrücke in den zugehörigen Hydraulikkammern 34, 35 gezeigt.

Soweit anwendbar können alle einzelnen Merkmale, die in den Ausführungsbeispielen dargelegt sind, miteinander kombiniert und/oder ausgetauscht werden, ohne den Bereich der Erfindung zu verlassen.

### Bezugszeichenliste

- 1: Hydraulischer Regelkreis
- 10: Erstes Hydraulikventil
- 10a: Druckspeicher des ersten Hydraulikventils
- 10b: Hydraulikfluidbehälter des ersten Hydraulikventils
- 11: Zweites Hydraulikventil
- 11a: Druckspeicher des zweiten Hydraulikventils
- 11b: Hydraulikfluidbehälter des zweiten Hydraulikventils
- 12: Positionsregler
- 13: Druckregler
- 14: Druckmesser
- 15: Solldruck-Eingabe
- 16: Schalteinrichtung
- 17: Anpassungseinrichtung
- 18: Wegmesser
- 18a: Wegsensor
- 19: Verschleißanpassungseinrichtung
- 20: Sollposition-Eingabe

- 3: Stellzylinder
- 31: Gehäuse
- 32: Kolben
- 32a: Erste Zylinderfläche
- 32b: Zweite Zylinderfläche
- 33: Kolbenstange
- 34: Erste Hydraulikkammer
- 35: Zweite Hydraulikkammer

## Patentansprüche

1. Hydraulischer Regelkreis (1) zur Steuerung eines hydraulischen Stellzylinders (3), insbesondere eines Anstellzylinders für eine Arbeitswalze in einem Walzgerüst, der ein zylindrisches Gehäuse (31) und einen darin verschiebbar angeordneten Kolben (32) aufweist, der das Gehäuseinnere in eine erste Hydraulikkammer (34) und eine zweite Hydraulikkammer (35) unterteilt, wobei der Regelkreis (1) aufweist:
zumindest ein erstes Hydraulikventil (10), das eingerichtet ist, um die erste Hydraulikkammer (34) mit einem Hydraulikfluid zu beaufschlagen, wobei der Hydraulikdruck der ersten Hydraulikkammer (34) über eine Ansteuerung des ersten Hydraulikventils (10) einstellbar ist;
zumindest ein zweites Hydraulikventil (11), das eingerichtet ist, um die zweite Hydraulikkammer (35) mit einem Hydraulikfluid zu beaufschlagen, wobei der Hydraulikdruck der zweiten Hydraulikkammer (35) über eine Ansteuerung des zweiten Hydraulikventils (11) einstellbar ist;
eine Regeleinrichtung (12 - 20), die zur Ansteuerung der beiden Hydraulikventile (10, 11) vorgesehen und eingerichtet ist, um in einem Positionsregelzustand das zweite Hydraulikventil (11) mit einem von der Arbeitsstellung des Kolbens (32) abhängigen Positionsregelsignal anzusteuern und das erste Hydraulikventil (10) mit einem angepassten Positionsregelsignal, das ein auf der Basis des Positionsregelsignals erzeugtes Signal ist, anzusteuern;
**dadurch gekennzeichnet, dass**
die Regeleinrichtung (12 - 20) eine Schalteinrichtung (16) aufweist, die zum Umschalten zwischen dem Positionsregelzustand und einem Druckregelzustand eingerichtet ist, wobei im Druckregelzustand zur Positionierung des Kolbens (32) das erste Hydraulikventil (10) durch die Regeleinrichtung (12 - 20) so angesteuert wird, dass der Hydraulikdruck in der ersten Hydraulikkammer (34) im Wesentlichen konstant bleibt, während das zweite Hydraulikventil (11), angesteuert durch das Positionsregelsignal, als Stellglied fungiert.

2. Hydraulischer Regelkreis (1) nach Anspruch 1, **dadurch gekennzeichnet, dass** die Regeleinrichtung (12 - 20) eingerichtet ist, um die Ansteuerung der beiden Hydraulikventile (10, 11) im Fall einer plötzlichen Belastungsänderung des Kolbens (32), vorzugsweise beim Anstich des Walzgerüsts, in dem Positionsregelzustand durchzuführen.

3. Hydraulischer Regelkreis (1) nach Anspruch 1 oder 2, **dadurch gekennzeichnet, dass** die Regeleinrichtung (12 - 20) einen Positionsregler (12), der zur Erzeugung des Positionsregelsignals eingerichtet ist, sowie eine Anpassungseinrichtung (17) mit einer Eingabe, die das Positionsregelsignal empfängt, und einer Ausgabe, die das angepasste Positionsregelsignal ausgibt, aufweist, wobei die Anpassungseinrichtung (17) eingerichtet ist, um das angepasste Positionsregelsignal auf der Basis, vorzugsweise durch Invertierung, des Positionsregelsignals zu erzeugen.

4. Hydraulischer Regelkreis (1) nach einem der vorigen Ansprüche, **dadurch gekennzeichnet, dass** die Regeleinrichtung (12 - 20) eine Verschleißanpassungseinrichtung (19) aufweist, die eingerichtet ist, um das Positionsregelsignal mit einem zusätzlichen Faktor zu bewerten, der zur Kompensation des Verschleißes des ersten und/oder zweiten Hydraulikventils (10, 11) vorgesehen ist.

5. Hydraulischer Regelkreis (1) nach einem der vorigen Ansprüche, **dadurch gekennzeichnet, dass** der Kolben (32) eine erste Zylinderfläche (32a) und eine zweite Zylinderfläche (32b) aufweist und der Nenndurchfluss des ersten Hydraulikventils (10) um das Flächenverhältnis der ersten Zylinderfläche (32a) zur zweiten Zylinderfläche (32b) geringer ist als der Nenndurchfluss des zweiten Hydraulikventils (11), wobei vorzugsweise die erste Zylinderfläche (32a) auf der Stangenseite des Kolbens (32) angeordnet ist, während sich auf der gegenüberliegenden Seite des Kolbens (32) keine Kolbenstange befindet.

6. Hydraulischer Regelkreis (1) nach einem der vorigen Ansprüche, **dadurch gekennzeichnet, dass** das erste Hydraulikventil (10) und/oder das zweite Hydraulikventil (11) ein Stetigventil ist.

7. Verfahren zur Steuerung eines hydraulischen Stellzylinders (3), insbesondere eines Anstellzylinders für eine Arbeitswalze in einem Walzgerüst, der ein zylindrisches Gehäuse (31) und einen darin verschiebbar angeordneten Kolben (32) aufweist, der das Gehäuseinnere in eine erste Hydraulikkammer (34) und eine zweite Hydraulikkammer (35) unterteilt, wobei das Verfahren aufweist:
Beaufschlagen der ersten Hydraulikkammer (34) mit einem Hydraulikdruck mittels eines ersten Hydraulikventils (10);
Beaufschlagen der zweiten Hydraulikkammer (35) mit einem Hydraulikdruck mittels eines zweiten Hydraulikventils (11); wobei
in einem Positionsregelzustand die zweite Hydraulikkammer (35) mit einem von der Arbeitsstellung des Kolbens (32) abhängigen Hydraulikdruck beaufschlagt wird, indem das zweite Hydraulikventil (11) mit einem Positionsregelsignal angesteuert wird, und die erste Hydraulikkammer (34) mit einem von der Arbeitsstellung des Kolbens (32) abhängigen Hydraulikdruck beaufschlagt wird, indem das erste Hydraulikventil (10) mit einem angepassten Positionsregelsignal, das ein auf der Basis des Positionsregelsignals erzeugtes Signal ist, angesteuert wird
**dadurch gekennzeichnet, dass** das Verfahren ferner aufweist:
Positionieren des Kolbens (32) in einem Druckregelzustand, in dem das erste Hydraulikventil (10) so angesteuert wird, dass der Hydraulikdruck in der ersten Hydraulikkammer (34) im Wesentlichen konstant bleibt, und das zweite Hydraulikventil (11) durch das Positionsregelsignal angesteuert wird; und Umschalten vom Druckregelzustand in den Positionsregelzustand.

8. Verfahren nach Anspruch 7, **dadurch gekennzeichnet, dass** die Ansteuerung der beiden Hydraulikventile (10, 11) im Fall einer plötzlichen Belastungsänderung des Kolbens (32), vorzugsweise beim Anstich des Walzgerüsts, in dem Positionsregelzustand durchgeführt wird.

9. Verfahren nach Anspruch 7 oder 8, **dadurch gekennzeichnet, dass** das angepasste Positionsregelsignal durch Invertierung des Positionsregelsignals erzeugt wird.

10. Verfahren nach einem der Ansprüche 7 bis 9, **dadurch gekennzeichnet, dass** das Positionsregelsignal mit einem zusätzlichen Faktor bewertet wird, der vorzugsweise zur Kompensation des Verschleißes des ersten und/oder zweiten Hydraulikventils (10, 11) vorgesehen ist.

11. Verfahren nach Anspruch 10, **dadurch gekennzeichnet, dass** als Maß für den Verschleiß die Ausgabe eines Leckfluidintegrierers herangezogen wird.

12. Verfahren nach einem der Ansprüche 7 bis 11, **dadurch gekennzeichnet, dass** der Hydraulikdruck in der ersten und/oder zweiten Hydraulikkammer (34, 35) im Druckregelzustand vor dem Umschalten in den Positionsregelzustand im Wesentlichen auf den Systemdruck eingestellt wird.

13. Verfahren nach einem der Ansprüche 7 bis 12, **dadurch gekennzeichnet, dass** im Positionsregelzustand der von der Stellung des Kolbens (32) abhängige Hydraulikdruck in der ersten und/oder zweiten Hydraulikkammer (34, 35) so eingestellt wird, dass er von der Anschlagstellung des Kolbens auf der bei einer auftretenden Belastungsänderung des Kolbens (32) entlasteten Kolbenseite bis zur gegenüberliegenden Anschlagstellung über den Stellweg abnimmt.

## Claims

1. Hydraulic regulating circuit (1) for controlling a hydraulic setting cylinder (3), particularly an adjusting cylinder for a work roll in a roll stand, which comprises a cylindrical housing (31) and a piston (32), which is arranged therein to be displaceable and which divides the housing interior into a first hydraulic chamber (34) and a second hydraulic chamber (35), wherein the regulating circuit (1) comprises:
at least one first hydraulic valve (10) arranged to load the first hydraulic chamber (34) with a hydraulic fluid, wherein the hydraulic pressure of the first hydraulic chamber (34) is settable by way of activation of the first hydraulic valve (10);
at least one second hydraulic valve (11) arranged to load the second hydraulic chamber (35) with a hydraulic fluid, wherein the hydraulic pressure of the second hydraulic chamber (35) is settable by way of activation of the second hydraulic valve (11);
a regulating device (12 - 20), which is provided for activation of the two hydraulic valves (10, 11) and which is arranged in a position regulating state to activate the second hydraulic valve (11) by a position regulating signal dependent on the work setting of the piston (32) and to activate the first hydraulic valve (10) by an adapted position regulating signal, which is a signal generated on the basis of the position regulating signal;
**characterised in that**
the regulating device (12 - 20 comprises a switching device (16) which is arranged for switching between the position regulating state and a pressure regulating state, wherein in the position regulating state the first hydraulic valve (10 is, for positioning of the piston (32), so activated by the regulating device (12 - 20) that the hydraulic pressure in the first hydraulic chamber (34) remains substantially constant, whilst the second hydraulic valve (11), activated by the position regulating signal, functions as setting element.

2. Hydraulic regulating circuit (1) according to claim 1, **characterised in that** the regulating device (12 - 20) is arranged to carry out activation of the two hydraulic valves (10, 11) to the position regulating state in the event of a sudden change in load of the piston (32), preferably during an initial pass of the roll stand.

3. Hydraulic regulating circuit (1) according to claim 1 or 2, **characterised in that** the regulating device (12 - 20) comprises a position regulator (12), which is arranged to generate the position regulating signal, as well as a adaptation device (17) with an input which receives the position regulating signal and an output which issues the adapted position regulating signal, wherein the adaptation device (17) is arranged to generate the adapted position regulating signal on the basis of the position regulating signal, preferably by inverting.

4. Hydraulic regulating circuit (1) according to any one of the preceding claims, **characterised in that** the regulating device (12 - 20) comprises a wear adaptation device (19) arranged to weight the position regulating signal by an additional factor provided for compensation for wear of the first and/or second hydraulic valve (10, 11).

5. Hydraulic regulating circuit (1) according to any one of the preceding claims, **characterised in that** the piston (32) has a first cylinder surface (32a) and a second cylinder surface (32b) and the rated throughflow of the first hydraulic valve (10) is smaller than the rated throughflow of the second hydraulic valve (11) by the surface ratio of the first cylinder surface (32a) to the second cylinder surface (32b), wherein the first cylinder surface (32a) is preferably arranged on the rod side of the piston (32), no piston rod being present on the opposite of the piston (32).

6. Hydraulic regulating circuit (1) according to any one of the preceding claims, **characterised in that** the first hydraulic valve (10) and/or the second hydraulic valve (11) is a proportional valve.

7. Method of controlling a hydraulic setting cylinder (3), particularly an adjusting cylinder for a work roll in a roll stand, which comprises a cylindrical housing (31), and a piston (32), which is arranged therein to be displaceable and which divides the housing interior into a first hydraulic chamber (34 and a second hydraulic chamber (35), wherein the method comprises:
loading the first hydraulic chamber (34) with a hydraulic pressure by means of a first hydraulic valve (10);
loading the second hydraulic chamber (35) with a hydraulic pressure by means of a second hydraulic valve (11); wherein
in a position regulating state the second hydraulic chamber (35) is loaded with a hydraulic pressure dependent on the work setting of the piston (32) in that the second hydraulic valve (11) is activated by a position regulating signal and the first hydraulic chamber (34) is loaded with a hydraulic pressure dependent on the work setting of the piston (32), in that the first hydraulic valve (10) is activated by an adapted position regulating signal which is a signal generated on the basis of the position regulating signal,
**characterised in that** the method further comprises:
positioning the piston (32) in a pressure regulating state, in which the first hydraulic valve (10) is so activated that the hydraulic pressure in the first hydraulic chamber (34) remains substantially constant and the second hydraulic valve (11) is activated by the position regulating signal; and
switching over from the pressure regulating state to the position regulating state.

8. Method according to claim 7, **characterised in that** the activation of the two hydraulic valves (10, 11) to the position regulating state is carried out in the event of a sudden change in load of the piston (32), preferably at the initial pass of the roll stand.

9. Method according to claim 7 or 8, **characterised in that** the adapted position regulating signal is generated by inverting the position regulating signal.

10. Method according to any one of claims 7 to 9, **characterised in that** the position regulating signal is weighted by an additional factor which is preferably provided for compensation for wear of the first and/or second hydraulic valve (10, 11).

11. Method according to claim 10, **characterised in that** the output of a leakage-fluid integrator is utilised as a measure for the wear.

12. Method according to any one of claims 7 to 11, **characterised in that** the hydraulic pressure in the first and/or second hydraulic chamber (34, 35) in the pressure regulating state is set substantially to the system pressure prior to switching over to the position regulating state.

13. Method according to any one of claims 7 to 12, **characterised in that** in the pressure regulating state the hydraulic pressure, which is dependent on the setting of the piston (32), in the first and/or second hydraulic chamber (34, 35) is so set that it decreases over the setting travel from the stop setting of the piston at the piston side, which is relieved when a change in load of the piston (32) occurs, to the opposite stop setting.

## Revendications

1. Circuit de régulation hydraulique (1) pour commander un vérin hydraulique (3), en particulier un vérin de réglage pour un cylindre de travail dans une cage de laminoir, qui présente un boîtier cylindrique (31) et un piston (32) disposé de manière coulissante dans celui-ci, qui divise l'intérieur du boîtier en une première chambre hydraulique (34) et une seconde chambre hydraulique (35), dans lequel le circuit de régulation (1) comprend :
au moins une première soupape hydraulique (10) qui est conçue pour alimenter la première chambre hydraulique (34) avec un fluide hydraulique, la pression hydraulique de la première chambre hydraulique (34) étant réglable au moyen d'une commande de la première soupape hydraulique (10) ;
au moins une seconde soupape hydraulique (11) qui est conçue pour alimenter la seconde chambre hydraulique (35) avec un fluide hydraulique, la pression hydraulique de la seconde chambre hydraulique (35) étant réglable au moyen d'une commande de la seconde soupape hydraulique (11) ;
un dispositif de régulation (12 - 20), qui est prévu pour commander les deux soupapes hydrauliques (10, 11) et configuré pour commander, dans un état de régulation de position, la seconde soupape hydraulique (11) avec un signal de régulation de position dépendant de la position de travail du piston (32) et la première soupape hydraulique (10) avec un signal de régulation de position adapté, qui est un signal généré sur la base du signal de régulation de position ;
**caractérisé en ce que**
le dispositif de régulation (12 - 20) est doté d'un dispositif de commutation (16) qui est configuré pour commuter entre l'état de régulation de position et un état de régulation de pression, dans lequel, dans l'état de régulation de pression pour le positionnement du piston (32), la première soupape hydraulique (10) est commandée par le dispositif de régulation (12 - 20) de telle sorte que la pression hydraulique dans la première chambre hydraulique (34) reste sensiblement constante, tandis que la seconde soupape hydraulique (11), commandée par le signal de régulation de position, fait office d'organe de réglage.

2. Circuit de régulation hydraulique (1) selon la revendication 1, **caractérisé en ce que** le dispositif de régulation (12 - 20) est configuré pour commander les deux soupapes hydrauliques (10, 11) en cas de variation soudaine de la charge du piston (32), de préférence lors de l'ouverture de la cage de laminoir, dans l'état de régulation de position.

3. Circuit de régulation hydraulique (1) selon l'une des revendications 1 ou 2, **caractérisé en ce que** le dispositif de régulation (12 - 20) comprend un régulateur de position (12) qui est conçu pour générer le signal de régulation de position, ainsi qu'un dispositif d'adaptation (17) avec une entrée, qui reçoit le signal de régulation de position, et une sortie, qui délivre le signal de régulation de position adapté, dans lequel le dispositif d'adaptation (17) est conçu pour générer le signal de régulation de position adapté sur la base du signal de régulation de position, de préférence par inversion.

4. Circuit de régulation hydraulique (1) selon l'une des revendications précédentes, **caractérisé en ce que** le dispositif de régulation (12 - 20) comprend un dispositif d'ajustement de l'usure (19) qui est conçu pour évaluer le signal de régulation de position avec un facteur supplémentaire prévu pour compenser l'usure de la première et/ou de la seconde soupape hydraulique (10, 11).

5. Circuit de régulation hydraulique (1) selon l'une des revendications précédentes, **caractérisé en ce que** le piston (32) comporte une première surface cylindrique (32a) et une seconde surface cylindrique (32b) et que le débit nominal de la première soupape hydraulique (10) est inférieur au débit nominal de la seconde soupape hydraulique (11) avec le rapport de surface entre la première surface cylindrique (32a) et la seconde surface cylindrique (32b), la première surface cylindrique (32a) étant de préférence disposée sur le côté tige du piston (32), tandis qu'aucune tige de piston ne se trouve sur le côté opposé du piston (32).

6. Circuit de régulation hydraulique (1) selon l'une des revendications précédentes, **caractérisé en ce que** la première soupape hydraulique (10) et/ou la seconde soupape hydraulique (11) est une soupape continue.

7. Procédé de commande d'un vérin hydraulique (3), en particulier un vérin de réglage pour un cylindre de travail dans une cage de laminoir, qui présente un boîtier cylindrique (31) et un piston (32) disposé de manière coulissante dans celui-ci, qui divise l'intérieur du boîtier en une première chambre hydraulique (34) et une seconde chambre hydraulique (35), ledit procédé comprenant :
l'application d'une pression hydraulique à la première chambre hydraulique (34) au moyen d'une première soupape hydraulique (10) ;
l'application d'une pression hydraulique à la seconde chambre hydraulique (35) au moyen d'une seconde soupape hydraulique (11) ; dans lequel
dans un état de régulation de position, la seconde chambre hydraulique (35) est soumise à une pression hydraulique dépendant de la position de travail du piston (32), en commandant la seconde soupape hydraulique (11) avec un signal de régulation de position, et la première chambre hydraulique (34) est soumise à une pression hydraulique dépendant de la position de travail du piston (32) en commandant la première soupape hydraulique (10) avec un signal de régulation de position adapté, qui est un signal généré sur la base du signal de régulation de position
**caractérisé en ce que** le procédé comprend en outre :
le positionnement du piston (32) dans un état de régulation de pression dans lequel la première soupape hydraulique (10) est commandée de telle sorte que la pression hydraulique dans la première chambre hydraulique (34) reste sensiblement constante, et la seconde soupape hydraulique (11) est commandée par le signal de régulation de position ; et
la commutation de l'état de régulation de pression à l'état de régulation de position.

8. Procédé selon la revendication 7, **caractérisé en ce que** la commande des deux soupapes hydrauliques (10, 11) est effectuée dans l'état de régulation de position en cas de variation soudaine de la charge du piston (32), de préférence lors de l'ouverture de la cage de laminoir.

9. Procédé selon l'une des revendications 7 ou 8, **caractérisé en ce que** le signal de régulation de position adapté est généré par inversion du signal de régulation de position.

10. Procédé selon l'une des revendications 7 à 9, **caractérisé en ce que** le signal de régulation de position est évalué avec un facteur supplémentaire qui est prévu de préférence pour compenser l'usure de la première et/ou de la seconde soupape hydraulique (10, 11).

11. Procédé selon la revendication 10, **caractérisé en ce que** la sortie d'un intégrateur de fluide de fuite est utilisée pour mesurer l'usure.

12. Procédé selon l'une des revendications 7 à 11, **caractérisé en ce que** la pression hydraulique dans la première et/ou la seconde chambre hydraulique (34, 35) est essentiellement ajustée à la pression du système dans l'état de régulation de pression avant la commutation dans l'état de régulation de position.

13. Procédé selon l'une des revendications 7 à 12, **caractérisé en ce que**, dans l'état de régulation de position, la pression hydraulique dans la première et/ou la seconde chambre hydraulique (34, 35), qui dépend de la position du piston (32), est réglée de telle sorte qu'elle diminue lors d'une variation de charge du piston (32) survenant sur la course de réglage entre la position de butée du piston sur le côté du piston déchargé et la position de butée opposée.
